# EUROPÄISCHE PATENTSCHRIFT

(11) **EP 2 176 193 B1**
(45) Veröffentlichungstag und Bekanntmachung des Hinweises auf die Patenterteilung: **12.09.2012**
(21) Anmeldenummer: 08774759.8
(22) Anmeldetag: 04.07.2008
(51) Int. Cl.: C04B 35/632, C04B 37/00, C04B 37/02

(54) **FÜGEVERFAHREN**
JOINING METHOD
PROCEDE DE JONCTION

(30) Priorität: 25.07.2007 DE 102007034609
(43) Veröffentlichungstag der Anmeldung: 21.04.2010
(73) Patentinhaber: Robert Bosch GmbH, 70442 Stuttgart (DE)
(72) Erfinder: RAMSAYER, Reiner, 71701 Schwieberdingen (DE); ACKERMANN, Jens, 70437 Stuttgart (DE)
(86) Internationale Anmeldenummer: PCT/EP2008/058647
(87) Internationale Veröffentlichungsnummer: WO 2009/013109

(56) Entgegenhaltungen:
- EP-A- 0 226 460
- WO-A-03/047859
- JP-A- 5 330 934
- US-A- 5 407 504
- US-A- 5 858 144
- US-A- 5 904 791
- US-B1- 6 214 472
- COLOMBO P ET AL: "JOINING OF REACTION-BONDED SILICON CARBIDE USING A PRECERAMIC POLYMER" JOURNAL OF MATERIALS SCIENCE, SPRINGER / BUSINESS MEDIA, DORDRECHT, NL, Bd. 33, Nr. 9, 1. Mai 1998 (1998-05-01), Seiten 2405-2412, XP000754494 ISSN: 0022-2461
- YUAN X K ET AL: "Fabrication and Life Prediction of SSiC Ceramic Joint Joined with Silicon Resin YR3370" CHINESE JOURNAL OF AERONAUTICS,, Bd. 20, Nr. 1, 1. Februar 2007 (2007-02-01), Seiten 81-85, XP022937449 ISSN: 1000-9361 [gefunden am 2007-02-01]
- PIPPEL E ET AL: "Structure and Composition of Interlayers in Joints Between SiC Bodies" JOURNAL OF THE EUROPEAN CERAMIC SOCIETY, ELSEVIER SCIENCE PUBLISHERS, BARKING, ESSEX, GB, Bd. 17, Nr. 10, 1. August 1997 (1997-08-01), Seiten 1259-1265, XP004217021 ISSN: 0955-2219
- BRUCE R L ET AL: "Polymer-derived SiCf/SiCm composite fabrication and microwave joining for fusion energy applications" 19TH. IEEE/NPSS SYMPOSIUM ON FUSION ENGINEERING. (SOFE99). ATLANTIC CITY, NJ, JAN. 21 - 25, 2002; [IEEE/NPSS SYMPOSIUM FUSION ENGINEERING], NEW YORK, NY : IEEE, US, 21. Januar 2002 (2002-01-21), Seiten 426-429, XP010599661 ISBN: 978-0-7803-7073-9
- DATABASE INSPEC [Online] THE INSTITUTION OF ELECTRICAL ENGINEERS, STEVENAGE, GB; November 2004 (2004-11), HONGLI LIU ET AL: "Joining of Cf/SiC ceramic matrix composite using SiC-Si3N4 preceramic polymer" XP002497015 Database accession no. 8386953 & FIFTH PACIFIC RIM INTERNATIONAL CONFERENCE ON ADVANCED MATERIALS AND PROCESSING PRICM-5 2-5 NOV. 2004 BEIJING, CHINA, Bd. 475-479, 2005, Seiten 1267-1270, Materials Science Forum Trans Tech Publications Switzerland ISSN: 0255-5476
- DATABASE INSPEC [Online] THE INSTITUTION OF ELECTRICAL ENGINEERS, STEVENAGE, GB; Oktober 2001 (2001-10), LEWINSOHN C A ET AL: "Stresses occurring during joining of ceramics using preceramic polymers" XP002497016 Database accession no. 7089539 & Journal of the American Ceramic Society American Ceramic Soc USA, Bd. 84, Nr. 10, Oktober 2001 (2001-10), Seiten 2240-2244, ISSN: 0002-7820
- DATABASE INSPEC [Online] THE INSTITUTION OF ELECTRICAL ENGINEERS, STEVENAGE, GB; 2004, LIU HONGLI ET AL: "Joining of SiC and SiC-based composites using preceramic polymers" XP002497017 Database accession no. 8406544 & Journal of the Chinese Ceramic Society Chinese Ceramic Soc China, Bd. 32, Nr. 10, 2004, Seiten 1246-1251, ISSN: 0454-5648
- SCHIAVON M A ET AL: "Poly(borosilazanes) as precursors of SiBCN glasses: synthesis and high temperature properties" JOURNAL OF NON-CRYSTALLINE SOLIDS, NORTH-HOLLAND PHYSICS PUBLISHING. AMSTERDAM, NL, Bd. 348, 15. November 2004 (2004-11-15), Seiten 156-161, XP004645365 ISSN: 0022-3093

## Beschreibung

### Stand der Technik

Die Erfindung betrifft ein Fügeverfahren gemäß dem Oberbegriff des Anspruchs 1, wie es aus der US 54075041 bekannt ist.

Das Fügen von keramischen Werkstoffen (artgleich oder artungleich) untereinander sowie das Fügen eines keramischen Fügepartners mit einem Fügeparnter aus einem nichtkeramischen Material, wie beispielsweise einem metallischen Werkstoff ist seit jeher problematisch. Formschlüssige Verbindungen scheiden in der Regel aufgrund der Sprödigkeit von Keramik aus. Bisher sind zum Herstellen von Verbindungen mit mindestens einem keramischen Fügepartner nur wenige Verfahren bekannt. Beispielsweise ist der Einsatz von metallischen Loten oder Glasloten Stand der Technik. Daneben wird das direkte schmelzflüssige Fügen eingesetzt, welches jedoch nur bei ganz bestimmten Keramikwerkstoffgruppen anwendbar ist. Typische Prozesstemperaturen zum schmelzflüssigen Fügen mindestens eines keramischen Fügepartners mit einem weiteren Fügepartner oder zum Aufschmelzen von Glasloten oder metallischen Loten liegen typischerweise in einem Bereich zwischen etwa 900°C und etwa 1600°C. Sollen mit derartigen Verfahren, die noch Gegenstand von Forschungsarbeiten sind und sich nach Kenntnis der Anmelderin noch nicht als serienreife Fertigungsverfahren etabliert haben, beispielsweise hermetisch abgeschlossene Sensoreinheiten hergestellt werden, so sind die benötigten, hohen Prozesstemperaturen wohl kaum realisierbar, da mögliche verbaute Elektronikkomponenten oder zugehörige Anbauteile der Fügepartner diesen hohen Temperaturen nicht standhalten würden. Beim Fügen eines keramischen Fügepartners mit einem metallischen Fügepartner sind die benötigten, hohen Prozesstemperaturen zudem aufgrund der unterschiedlichen Wärmeausdehnungskoeffizienten von Metall und Keramik schädlich, da diese zu hohen Spannungen beim Aufheizen und Abkühlen und demzufolge zu Rissen in dem Keramikfügepartner führen können. Aufgabe der Erfindung ist es, ein Fügeverfahren nach dem Oberbegriff des Anspruchs 1 derart weiterenbilden, dass zwei Fügepartnern unter Verasendung eines prekeremichen polymers verbunden werden, wobei dass Verfahren sicherstellen soll, dass in der Umgebung der Fügestelle angeordnete Anbauteile, elektronische Komponenten, etc. nicht oder nur unwesentlich beeinflusst oder gar geschädigt werden. Insbesondert sollen mittels des Fügeverfahrens die Fügepartner vorzugsweise auch bereits bei Prozesstemperaturen unterhalb von 1000°C miteinander verbindbar sind.

Diese Aufgabe wird hinsichtlich des Fügeverfahrens mit den Merkmalen des Anspruchs 1 gelöst. Vorteilhafte Weiterbildungen der Erfindungen sind in den Unteransprüchen angegeben. In den Rahmen der Erfindung fallen auch sämtliche Kombinationen aus zumindest zwei, von in der Beschreibung, den Ansprüchen und/den Figuren offenbarten Merkmalen.

Der Erfindung liegt der Gedanke zugrunde, zum Fügen eines keramischen Fügepartners mit mindestens einem zweiten Fügepartner, bei dem es sich um ein artgleiches oder artungleiches keramisches Material und/oder um ein nicht keramisches Material, wie insbesondere Metall, handeln kann, mindestens ein prekeramisches Polymer (Precursor) einzusetzen, das in einem (späteren) Fügebereich der mindestens zwei Fügepartner aufgetragen und ausschließlich, lokal auf eine Fügetemperatur erhitzt wird, bei der sich das prekeramische Polymer in eine amorphe und/oder kristalline, die Fügepartner fest miteinander verbindende Keramik umwandelt. Es liegt im Rahmen der Erfindung, die Fügepartner zunächst zusammenzuführen und erst daraufhin das mindestens ein prekeramisches Polymer in den Fügebereich zwischen den Fügepartnern einzubringen, oder aber zunächst das prekeramische Polymer auf zumindest einen der Fügepartner in dem späteren Fügebereich aufzubringen und daraufhin die Fügepartner in dem Fügebereich aneinander anzulegen oder gegeneinander zu verpressen. Unter "Zusammenführen" im Sinne der Erfindung wird nicht notwendigerweise ein Berühren der Fügepartner verstanden, da, wenn zuvor das prekeramische Polymer aufgebracht wurde, dieses sich zwischen den Fügepartnern befindet. Durch das "Zusammenführen" wird in diesem Fall vielmehr eine Sandwichstruktur mit zwei äußeren Fügepartnern und einem zwischen diesen befindlichen prekeramischen Polymer erhalten.

Das Aufbringen des mindestens einen prekeramischen Polymers kann je nach Beschaffenheit des prekeramischen Polymers durch Besprühen, Eintauchen, Bedrucken, Beträufeln, etc. erfolgen. Durch die Anwendung des nach dem Konzept der Erfindung ausgestalteten Fügeverfahrens wird ein Verbund aus mindestens zwei Fügepartnern erhalten, von denen zumindest ein Fügepartner aus einem keramischen Material besteht. Der Verbund zeichnet sich dadurch aus, dass die Fügepartner in einem Fügebereich mittels einer amorphen und/oder kristallinen Keramik miteinander verbunden sind, wobei diese Keramik durch Erhitzen eines prekeramischen Polymers erzeugt wurde.

Je nach Beschaffenheit und/oder Zusammensetzung des mindestens einen zur Anwendung kommenden prekeramischen Polymers erfolgt bei dessen Erhitzen des Fügebereichs in einem Temperaturbereich typischerweise zwischen etwa 120°C und etwa 300°C eine chemische Vernetzung des prekeramischen Polymers. Durch weiteres Erhitzen, typischerweise auf eine Temperatur aus einem Temperaturbereich zwischen etwa 300°C und etwa 800°C, werden die Polymere, insbesondere unter Abspaltung von organischen Resten, pyrolisiert, und es bildet sich eine amorphe Keramik aus, die dauerfest mit den Fügepartnern verbunden ist. Die sich ausbildende Keramik ist von ihren Eigenschaften her dabei typischerweise nahezu mit einer kristallinen und monolithischen Keramik vergleichbar, so dass auch der Einsatzbereich der erhaltenen Verbindung in Bezug auf die Temperatur mit der von kristallinen und monolithischen Keramiken vergleichbar ist. Optional liegt es im Rahmen der Erfindung, die amorphe Keramik weiter zu erhitzen, insbesondere auf eine Temperatur aus einem Bereich zwischen etwa 1200°C und etwa 1500°C, um sie in eine kristalline Keramik umzuwandeln. Ebenso liegt es im Rahmen der Erfindung, den Fügebereich unmittelbar, d.h. ohne Temperaturrasten, auf etwa 300°C bis 800°C oder direkt auf etwa 1200°C bis etwa 1500°C zu erhitzen. Über die Vernetzungsdichte des prekeramischen Polymers können dessen Eigenschaften, beispielsweise deren Viskosität, so optimiert und angepasst werden, dass das Polymer für den Fügeprozess optimal angepasst ist.

Besonders vorteilhaft bei dem Einsatz von prekeramischen Polymeren ist es, dass diese bereits bei sehr niedrigen Temperaturen von unter 300°C zumindest teilweise vernetzen, wodurch sich der Fügebereich (Fügestelle) selbst gegen Deformation während des Fügeprozesses stabilisiert. Dies erlaubt eine robuste Prozessführung, da auf aufwendige Spanntechnik verzichtet werden kann.

Prekeramische Polymere sind bislang nur zum Beschichten von insbesondere metallischen Bauteilen bekannt Bezüglich möglicher, für das erfindungsgemäße Verfahren einsetzbarer, prekeramischer Polymere, mittels denen ein erfindungsgemäßer Verbund aus mindestens zwei Fügepartnern erhalten werden kann, wird auf folgende Veröffentlichungen verwiesen:
Motz, G., et.al.: Design of SiCN - Precursors for various applications, in: Ceramic Materials and Components for Engines, Wiley-VCH, S. 581- S. 585; und
Geiger, M.: Generation of ceramic coatings by laser pyrolysis of organo-metallic polymers, in: Conference Proceeding of 1st Int. Conf. On "THE" Coatings in Manufacturing Engineering, Oktober 14-15, 1999, Thessaloniki, Greece, S. 333 - S. 341,
die im Hinblick auf die Beschaffenheit der prekeramischen Polymere sowie bezüglich deren Herstellung zum Gegenstand der Offenbarung der vorliegenden Anmeldung gemacht werden, so dass die dort beschriebenen Polymere und die entsprechenden Herstellungsverfahren im Zusammenhang mit den Merkmalen der vorliegenden Anmeldung beanspruchbar sein sollen.

Mittels des erfinderischen Verfahrens ist es möglich, erstmals Hybridverbindungen zwischen Metallen und Keramiken herzustellen, die bislang technisch nicht realisierbar waren. Ferner können hermetisch dichte Baugruppen gefügt werden, ohne dass in diese integrierte Elektronikbestandteile und/oder die Keramik beschädigt wird. Darüber hinaus lassen sich dichte, thermisch und mechanisch hochfeste Verbindungen zwischen artgleichen oder artungleichen Keramiken sowie zwischen Keramiken und Metallen oder Keramiken und anders gearteten Materialien herstellen. Ferner ist mittels des erfindungsgemäßen Verfahrens die Herstellung dreidimensionaler Substrate und dadurch die Erhöhung der Integrationsdichte möglich. Beispielsweise können mittels der Erfindung hergestellte dreidimensionale Substrate beim Aufbau elektronischer Baugruppen eingesetzt werden, insbesondere zur Erhöhung der Integrationsdichte beim Chip-Packaging.

Als Beispiel für mögliche Verbindungen artungleicher keramischer Fügepartner seien an dieser Stelle Verbindungen zwischen ZrO₂ und Al₂O₃, insbesondere für keramische Sensoren, genannt.

In Weiterbildung der Erfindung ist mit Vorteil vorgesehen, dass der Fügebereich, insbesondere das im Fügebereich angeordnete prekeramische Polymer, lediglich auf eine Temperatur aus einem Bereich zwischen etwa 300°C und etwa 800°C erhitzt wird, um eine amorphe Keramik zu erhalten. Diese amorphe Keramik ist für die meisten Anwendungen von ausreichender Festigkeit, so dass bereits mit den genannten, vergleichsweise geringen Temperaturen eine feste Verbindung zwischen einem keramischen Fügepartner und mindestens einem weiteren Fügepartner geschaffen werden kann, insbesondere um Anbauteile und/oder elektronische Komponenten mindestens eines der Fügepartner nicht negativ zu beeinflussen oder gar zu beschädigen.

Für einige Anwendungsfälle kann es von Vorteil sein, den Fügebereich, also das mindestens eine prekeramische Polymer, auf eine Temperatur aus einem Bereich zwischen etwa 1200°C und etwa 1500°C zu erhitzen, um eine kristalline, insbesondere monolithische Keramik mit entsprechender Festigkeit zu erhalten.

Besonders gute Fügeergebnisse wurden durch die Verwendung von Polysilazanen als prekeramische Polymere erzielt. Von besonderem Vorteil ist der Einsatz von Chlorosilanen und/oder Polytitanosilazanen. Besonders bevorzugt ist es, modifizierte prekeramische Polymere einzusetzen, insbesondere prekeramische Polymere, die mit Hilfe von organo-metallischen Verbindungen, wie beispielsweise Ti(NR₂)₄, modifiziert wurden.

Bevorzugt erfolgt das Erhitzen temperaturgeregelt, insbesondere unter Einsatz eines Pyrometers, um optimale Fügeergebnisse zu erzielen und die thermische Belastung der Fügepartner sowie deren Bestandteilen so gering wie möglich zu halten.

Mit Vorteil wird zum lediglich lokalen Erhitzen des prekeramischen Polymers des späteren Verbundes aus mindestens zwei Fügepartnern Laserstrahlung eingesetzt, um den Pyrolysevorgang einzuleiten. Hierdurch bleibt die Umgebung der Fügestelle im Vergleich zu bekannten Fügeverfahren thermisch nahezu unbelastet. Durch den Einsatz von Laserstrahlung zur Aufheizung des Fügebereichs kann weiterhin durch eine geeignete Wahl der Laserstrahlwellenlänge der Temperatureintrag in das prekeramische Polymer gezielt optimiert werden. Ferner lassen sich durch Laserstrahlungsführungskomponenten, wie beispielsweise eines Laserscanners, nahezu beliebige Fügekonturen herstellen. Ein welte rer Vorteil des Einsatzes eines Laserscanners besteht darin, dass der Wärmeeintrag, durch die schnelle Bewegung des Laserstrahlfokus, quasi-simultan im gesamten Fügebereich erfolgen kann, wodurch ein insgesamt homogener Wärmeeintrag unter Vermeidung von Temperaturspitzen in der Keramik realisiert werden kann, was insgesamt in einem noch schonenderen Fügeverfahren resultiert.

Für den Fall, dass zur Umwandlung des prekeramischen Polymers in eine amorphe und/oder kristalline Keramik ein Ofenprozess eingesetzt wird, können die Fügepartner bevorzugt durch den Einsatz geeigneter Schutzmechanismen, beispielsweise von Isoliermaterialien, vor zu großem Wärmeeintrag zumindest weitgehend geschützt werden.

Aus verarbeitungstechnischen Gründen ist es von Vorteil, wenn ein flüssiges prekeramisches Polymer eingesetzt wird, oder, falls es sich bei dem prekeramischen Polymer um einen Feststoff handeln sollte, dieser in einer Trägerflüssigkeit suspendiert ist, um das prekeramische Polymer aufsprühen, auftropfen, oder durch Eintauchen zumindest eines der Fügepartner in dem Fügebereich aufbringen zu können.

Vorzugsweise wird das mindestens eine prekeramische Polymer zum Verbinden von keramischen Schaltungsträgern auf metallischen Baugruppen verwendet. Durch den Einsatz eines preVorzugsweise wird das mindestens eine prekeramische Polymer zum Verbinden von keramischen Schaltungsträgern auf metallischen Baugruppen verwendet. Durch den Einsatz eines prekeramischen Polymers kann der Wärmeübergang zwischen den Fügepartnern durch eine verbesserte Anbindung an die Wärmesenke (Metall) insbesondere bei elektronischen Baugruppen verbessert werden, so dass auf den Einsatz von heute üblichen Wärmeleitpasten und ggf. einer mechanischen Fixierung verzichtet werden kann. Durch das nach dem Konzept der Erfindung ausgebildete Fügeverfahren und/oder durch die Verwendung eines prekeramischen Polymers zum Fügen zweier Fügepartnern kann der keramische Fügepartner (Wärmequelle) direkt mit beispielsweise einem metallischen Fügepartner, insbesondere einem Gehäuse oder ähnlichem (Wärmesenke), verbunden werden, wodurch Kosten, beispielsweise für eine zusätzliche mechanische Fixierung, eingespart werden können.

### Kurze Beschreibung der Zeichnungen

Weitere Vorteile, Merkmale und Einzelheiten der Erfindung ergeben sich aus der Beschreibung bevorzugter Ausführungsbeispiele sowie anhand der Zeichnungen. Diese zeigen in:
- Fig. 1:: in einer schematischen Darstellung den Ablauf der Keramisierung eines prekeramischen Polymers und
- Fig. 2:: in einer schematischen Darstellung eine vorteilhafte Fügeanordnung zum aneinander Festlegen zweier Fügepartner unter Verwendung eines Laserstrahls zum Erhitzen des prekeramischen Polymers.

### Ausführungsformen der Erfindung

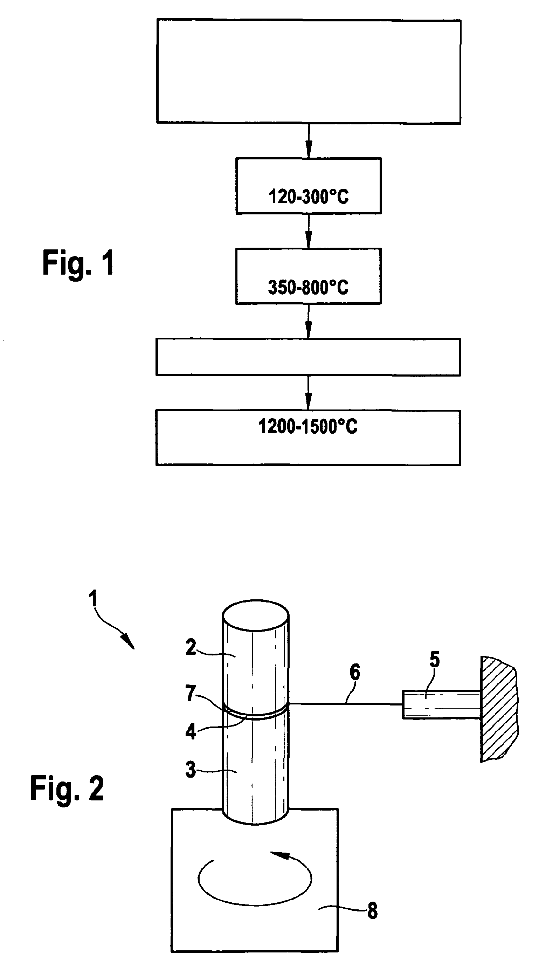

In Fig. 1 ist der Reaktionsverlauf beim Erhitzen eines zwischen zwei Fügepartnern vorgesehenen prekeramischen Polymers (Precusors), insbesondere von Polysilazanen, die vorzugsweise mit einer organo-metallischen Verbindung modifiziert sind, gezeigt. Bei einer Temperatur in einem Bereich zwischen etwa 120°C und etwa 300°C vernetzt das prekeramische Polymer, so dass der Fügebereich stabilisiert wird. In einem darüberliegenden Temperaturbereich zwischen etwa 350°C und etwa 800°C pyrolisiert das vernetzte prekeramische Polymer zu einem amorphen keramischen Material hoher Festigkeit Für Anwendungsfälle, in denen zusätzlich oder alternativ zu dem amorphen keramischen Material kristallines keramisches Material erhalten werden soll, muss der Fügebereich auf eine Temperatur aus einem Bereich zwischen etwa 1200°C und etwa 1500°C erhitzt werden. Es liegt im Rahmen der Erfindung, in den angegebenen Temperaturbereichen Temperaturrasten einzuhalten. Alternativ ist es denkbar, den Fügebereich unmittelbar auf die gewünschte Temperatur zum Erhalten von amorphem oder kristallinem keramischem Material zu erhitzen.

In Fig. 2 ist ein möglicher Aufbau einer Fügeanordnung 1 (Fügevorrichtung) gezeigt Dabei befindet sich ein erster keramischer Fügepartner 2 auf einem zweiten metallischen Fügepartner 3, wobei zwischen den Fügepartnern 2, 3 eine Schicht aus prekeramischem Polymer 4 vorgesehen ist. Mittels einer Laserstrahlquelle 5 wird ein Laserstrahl 6 erzeugt, der unmittelbar auf den Fügebereich 7 zwischen den Fügepartnern 2, 3 gerichtet ist. In diesem Ausführungsbeispiel ist die Laserstrahlquelle 5 ortsfest angeordnet und die Fügepartner 2, 3 auf einer Rotationsvorrichtung 8, so dass Wärmeenergie umfänglich im Fügebereich 7 eingetragen werden kann. Zusätzlich oder alternativ ist es denkbar, einen Laserscanner einzusetzen oder eine Vorrichtung, mit der ein vergleichsweise homogener Energieeintrag am Umfang der Fügepartner 2, 3 eingetragen werden kann.

Der Einsatz eines Laserscanners hätte zudem den Vorteil, dass beliebige Fügekonturen mit hoher Geschwindigkeit von dem Laserfokus abgefahren werden könnten.

## Patentansprüche

1. Verfahren zum Fügen eines ersten keramischen Fügepartners (2) mit mindestens einem zweiten Fügepartner (3) mit folgenden Schritten:
- Aufbringen mindestens eines prekeramischen Polymers (4) auf den ersten und/oder den zweiten Fügepartner (2, 3) in einem Fügebereich (7);
- Zusammenführen der Fügepartner (2, 3) im Fügebereich (7);
- Erhitzen des Fügebereichs (7), derart, dass sich das prekeramische Polymer (4) in eine amorphe und/oder eine kristalline, die Fügepartner (2, 3) miteinander fest verbindende Keramik umwandelt,
**dadurch gekennzeichnet,**
**dass** eine ausschließlich lokale Erhitzung des Fügebereichs (7) und ggf. eines unmittelbar benachbarten Bereichs des ersten und/oder des zweiten Fügepartners (2, 3) erfolgt.

2. Verfahren nach Anspruch 1,
**dadurch gekennzeichnet,**
**dass** zum Erhitzen des Fügebereichs (7) Laserstrahlung (6) eingesetzt wird.

3. Verfahren nach Anspruch 1 oder 2,
**gekennzeichnet durch**
Erhitzen des Fügebereichs (7) auf eine Temperatur aus einem Temperaturbereich zwischen etwa 300°C und etwa 800°C.

4. Verfahren nach einem der Ansprüche 1 oder 2,
**gekennzeichnet durch**
Erhitzen des Fügebereichs (7) auf eine Temperatur aus einem Temperaturbereich zwischen etwa 1200°C und etwa 1500°C, ggf. unter vorheriger Erhitzung des Fügebereichs (7) auf eine Temperatur aus einem Temperaturbereich zwischen 300°C und etwa 800°C und zeitweises Halten dieser Temperatur.

5. Verfahren nach einem der vorhergehenden Ansprüche,
**dadurch gekennzeichnet,**
**dass** das prekeramische Polymer (4) mindestens ein Polysilazan umfasst oder aus mindestens einem Polysilazan gebildet ist.

6. Verfahren nach einem der vorhergehenden Ansprüche,
**dadurch gekennzeichnet,**
**dass** als zweiter Fügepartner (3) ein keramisches und/oder metallisches Material eingesetzt wird.

7. Verfahren nach einem der vorhergehenden Ansprüchen,
**dadurch gekennzeichnet,**
**dass** das prekeramische Polymer (4) in flüssiger Form und/oder als Suspension mit einer Trägerflüssigkeit eingesetzt wird.

8. Verfahren nach einem der Ansprüche 1 bis 7,
**dadurch gekennzeichnet,**
**dass** die lokale Erhitzung des Fügebereichs (7) temperaturgeregelt, vorzugsweise unter Verwendung eines Pyrometers, erfolgt.

9. Verfahren nach einem der Ansprüche 2 bis 8,
**dadurch gekennzeichnet,**
**dass** die lokale Erhitzung des Fügebereichs (7) unter Verwendung eines Laserscanners erfolgt.

## Claims

1. Method of joining a first ceramic joining partner (2) to at least one second joining partner (3), which comprises the following steps:
- application of at least one preceramic polymer (4) to the first joining partner and/or the second joining partner (2, 3) in a join region (7);
- bringing together of the joining partners (2, 3) in the join region (7);
- heating of the join region (7) in such a way that the preceramic polymer (4) is converted into an amorphous and/or crystalline ceramic which firmly joins the joining partners (2,3) to one another,
**characterized**
**in that** exclusively local heating of the join region (7) and optionally a directly adjacent region of the first joining partner and/or the second joining partner (2,3) is carried out.

2. Method according to Claim 1, **characterized in that** laser radiation (6) is used for heating the join region (7).

3. Method according to Claim 1 or 2, **characterized by** heating of the join region (7) to a temperature in the temperature range from about 300°C to about 800°C.

4. Method according to either Claim 1 or 2, **characterized by** heating of the join region (7) to a temperature in the temperature range from about 1200°C to about 1500°C, optionally with prior heating of the join region (7) to a temperature in the temperature range from 300°C to about 800°C and holding of this temperature for a time.

5. Method according to any of the preceding claims, **characterized in that** the preceramic polymer (4) comprises at least one polysilazane or is formed by at least one polysilazane.

6. Method according to any of the preceding claims, **characterized in that** a ceramic and/or metallic material is used as second joining partner (3).

7. Method according to any of the preceding claims, **characterized in that** the preceramic polymer (4) is used in liquid form and/or as suspension containing a carrier liquid.

8. Method according to any of Claims 1 to 7, **characterized in that** the local heating of the join region (7) is carried out in a temperature-regulated manner, preferably using a pyrometer.

9. Method according to any of Claims 2 to 8, **characterized in that** the local heating of the joined region (7) is carried out using a laser scanner.

## Revendications

1. Dispositif de jonction d'un premier partenaire céramique de jonction (2) avec au moins un deuxième partenaire de jonction (3), le dispositif présentant les étapes qui consistent à :
appliquer au moins un polymère pré-céramique (4) sur le premier et/ou le deuxième partenaire de jonction (2, 3) dans une zone de jonction (7),
assembler les partenaires de jonction (2, 3) dans la zone de jonction (7) et
chauffer la zone de jonction (7) de telle sorte que le polymère pré-céramique (4) soit converti en une céramique amorphe et/ou une céramique cristalline qui relient solidairement l'un à l'autre les partenaires de jonction (2, 3),
le procédé étant **caractérisé en ce que**
on effectue un chauffage exclusivement local de la zone de jonction (7) et éventuellement d'une zone directement voisine du premier et/ou du deuxième partenaire de jonction (2, 3).

2. Procédé selon la revendication 1, **caractérisé en ce qu'**on utilise un rayonnement laser (6) pour chauffer la zone de jonction (7).

3. Procédé selon les revendications 1 ou 2, **caractérisé par** le chauffage de la zone de jonction (7) à une température comprise dans une plage située entre environ 300°C et environ 800°C.

4. Procédé selon les revendications 1 ou 2, **caractérisé par** le chauffage de la zone de jonction (7) à une température comprise dans une plage située entre environ 1 200°C et environ 1 500°C, éventuellement avec chauffage préalable de la zone de jonction (7) à une température comprise dans la plage qui s'étend entre 300°C et environ 800°C et maintien temporaire à cette température.

5. Procédé selon l'une des revendications précédentes, **caractérisé en ce que** le polymère pré-céramique (4) comporte au moins un polysilazane ou est formé d'au moins un polysilazane.

6. Procédé selon l'une des revendications précédentes, **caractérisé en ce qu'**il utilise comme deuxième partenaire de jonction (3) un matériau céramique et/ou un matériau métallique.

7. Procédé selon l'une des revendications précédentes, **caractérisé en ce que** le polymère pré-céramique (4) est utilisé sous forme liquide et/ou en suspension dans un liquide porteur.

8. Procédé selon l'une des revendications 1 à 7, **caractérisé en ce que** le chauffage local de la zone de jonction (7) s'effectue avec régulation de la température, de préférence en recourant à un pyromètre.

9. Procédé selon l'une des revendications 2 à 8, **caractérisé en ce que** le chauffage local de la zone de jonction (7) s'effectue en utilisant un scanner laser.
